# EUROPEAN PATENT APPLICATION

(11) **EP 4 825 634 A1**
(43) Date of publication of application: **21.10.2026**
(21) Application number: 24926461.5
(22) Date of filing: 01.03.2024
(51) Int. Cl.: B60K 37/10

(54) **LOCKING MECHANISM, SECONDARY INSTRUMENT PANEL AND VEHICLE**

(71) Applicant: Zhejiang Geely Holding Group Co., Ltd., Hangzhou, Zhejiang 310051 (CN); Geely Automobile Research Institute (Ningbo) Co., Ltd., Ningbo, Zhejiang 315336 (CN)
(72) Inventor: CHEN, Xiangning, Hangzhou Bay New District Ningbo, Zhejiang 315336 (CN); YONG, Kuan, Hangzhou Bay New District Ningbo, Zhejiang 315336 (CN); GAO, Shishan, Hangzhou Bay New District Ningbo, Zhejiang 315336 (CN); WANG, Qi, Hangzhou Bay New District Ningbo, Zhejiang 315336 (CN); LIU, Zihao, Hangzhou Bay New District Ningbo, Zhejiang 315336 (CN)
(74) Representative: Michalski Hüttermann & Partner mbB
(86) International application number: PCT/CN2024/079694
(87) International publication number: WO 2025/179585

(57) **Abstract**

Disclosed are a locking mechanism (10), a console (20), and a vehicle. The locking mechanism (10) includes a main body (100), a locking member (200), and a limiting member (300). The main body (100) is provided with an accommodating cavity (130) and a first hole (121) in communication with the accommodating cavity (130). The locking member (200) includes a locking portion (210), and the locking member (200) is movable relative to the main body (100) to a first position and a second position in a first direction. The limiting member (300) and the locking member (200) are movable relative to each other in a second direction, the second direction intersecting the first direction. When the locking member (200) is in the first position, the locking portion (210) is retracted into the first hole (121), and the limiting member (300) abuts against the locking member (200) to limit the movement of the locking portion (210) out of the first hole (121). When the locking member (200) is in the second position, at least a part of the locking portion (210) extends out of the main body (100) from the first hole (121).

## Description

### TECHNICAL FIELD

The present disclosure relates to the technical field of vehicle parts and accessories, and in particular to a locking mechanism, a console, and a vehicle.

### BACKGROUND

In the related art, a function box is designed to be detachable from a console, so as to facilitate the off-vehicle use or function replacement of the function box. A locking mechanism is required to connect the function box to the console. In the related art, the locking hook of the locking mechanism is exposed to the outside, which is easy to cause interference when the function box is not loaded, leading to problems such as hitting a hand or hooking an object, and may also result in damage to the locking mechanism. Therefore, it is necessary to study and solve the above problems.

### SUMMARY

The following is a summary of subject matter described in detail herein. This summary is not intended to limit the scope of protection of the claims.

Embodiments of the present disclosure provide a locking mechanism, a console, and a vehicle, which can hide a locking portion in an unlocked state.

Embodiments in a first aspect of the present disclosure provide a locking mechanism, including a main body, a locking member, and a limiting member. The main body is provided with an accommodating cavity and a first hole in communication with the accommodating cavity. The locking member is accommodated in the accommodating cavity, where the locking member includes a locking portion configured to lock a function box, and the locking member is movable relative to the main body to a first position and a second position in a first direction. The limiting member and the locking member are movable relative to each other in a second direction, where the second direction intersects the first direction.

When the locking member is in the first position, the locking portion is retracted into the first hole, the limiting member abuts against the locking member, and the limiting member is configured to limit movement of the locking portion out of the first hole. When the locking member is in the second position, at least a part of the locking portion extends out of the main body from the first hole.

The air conditioning apparatus according to embodiments in the first aspect of the present disclosure has at least the following beneficial effects. When the function box is not loaded, the locking mechanism is in the unlocked state, at this time, the locking member is kept in the first position under the action of the limiting member, and the locking portion is retracted in the first hole to hide the locking portion and reduce the probability of interference. When the function box is being loaded, the limiting member and the locking member are driven to move relative to each other in the second direction, the locking member, once no longer limited by the limiting member, moves to the second position, and the locking portion extends out of the main body to lock the function box, realizing the locking function.

In some embodiments, the locking mechanism further includes a first elastic member connected to the locking member and configured to drive the locking portion to extend out of the main body; the locking member includes a first abutting portion connected to the locking portion, and the limiting member includes a second abutting portion; when the locking member is in the first position, the second abutting portion abuts against the first abutting portion, and the second abutting portion is located between the first abutting portion and the first hole in the first direction; and when the locking member is in the second position, the second abutting portion is located on a side of the first abutting portion in the second direction.

In some embodiments, a second hole is provided on a side of the main body in the second direction and is in communication with the accommodating cavity, and the side of the main body provided with the second hole is configured to face the function box; the limiting member includes a first unlocking portion connected to the second abutting portion, and when the locking member is in the first position, at least a part of the first unlocking portion extends out of the main body from the second hole.

In some embodiments, the locking mechanism further includes a second elastic member connected to the limiting member and configured to drive the first unlocking portion to extend out of the main body.

In some embodiments, the limiting member further includes a limiting portion, where the limiting portion is connected to the second abutting portion, the limiting portion protrudes from at least one of sides of the second abutting portion in the first direction, and the limiting portion is configured to abut against the first abutting portion in the second direction.

In some embodiments, the locking member includes a plurality of locking portions arranged at intervals in a third direction, where the third direction is perpendicular to the first direction and is perpendicular to the second direction.

In some embodiments, the locking mechanism further includes a first elastic member connected to the locking member and configured to drive the locking portion to extend out of the main body; the locking member includes a first abutting portion connected to the locking portion, and the limiting member includes a second abutting portion; when the locking member is in the first position, the second abutting portion abuts against the first abutting portion, and the second abutting portion is located between the first abutting portion and the first hole in the first direction; when the locking member is in the second position, at least a part of the second abutting portion is located on a side of the first abutting portion in the second direction; and first abutting portions are respectively provided on sides of adjacent locking portions close to each other, the limiting member is provided between the adjacent locking portions, and second abutting portions are respectively provided on two sides of the limiting member facing the adjacent locking portions.

In some embodiments, the locking member includes a second unlocking portion connected to a middle of the adjacent locking portions in the third direction, the main body is provided with a third hole, the second unlocking portion passes through the third hole, the second unlocking portion extends out of the main body, and the third hole and the first hole are located on a same side of the main body.

In some embodiments, the first abutting portion is provided with a first guide surface inclined with respect to the first direction; the second abutting portion is provided with a second guide surface inclined with respect to the first direction; and when the locking member is in the second position, the first guide surface and the second guide surface abut against each other.

In some embodiments, the locking member includes a second unlocking portion connected to the locking portion, the main body is provided with a third hole, the second unlocking portion passes through the third hole, the second unlocking portion extends out of the main body, and the third hole and the first hole are located on a same side of the main body.

In some embodiments, the main body includes a mounting base and a cover, where the mounting base is connected to the cover, the accommodating cavity is defined between the mounting base and the cover, and the first hole is provided on the cover.

Embodiments in a second aspect of the present disclosure provide a console including a console body and the locking mechanism according to any one of the above embodiments, where the main body is connected to the console body.

In some embodiments, the console further includes a function box, the console body is provided with a mounting groove, the function box is accommodated in the mounting groove, and the function box is connected to the locking portion.

In some embodiments, the console body includes a front base, a bottom base, and a rear base connected in sequence, where the front base is configured to face a front of a vehicle, the mounting groove is defined between the front base, the bottom base, and the rear base, and the main body is connected to the rear base.

Embodiments in a third aspect of the present disclosure provide a vehicle including the console according to any one of the above embodiments.

In some embodiments, the vehicle includes a seat, where the console further includes an armrest, the main body is connected to the console, the armrest is connected to the console, the armrest is located on a side of the locking mechanism in the first direction, the armrest covers at least a part of the locking mechanism in the first direction, the seat is located on a side of the locking mechanism in a third direction, and the seat covers at least a part of the locking mechanism in the third direction, where the third direction is perpendicular to the first direction and is perpendicular to the second direction.

Additional features and advantages of the present disclosure will be set forth in the description which follows, and in part will be apparent from the description, or may be learned by practice of the present disclosure. The objectives and other advantages of the present disclosure can be realized and obtained by the structures particularly pointed out in the description, claims, and accompanying drawings.

### BRIEF DESCRIPTION OF DRAWINGS

FIG. 1 is a schematic diagram of a locking mechanism provided by an embodiment of the present disclosure.
FIG. 2 is a schematic exploded view of a locking mechanism provided by an embodiment of the present disclosure.
FIG. 3 is a schematic diagram of a partial structure of the locking mechanism in FIG. 1.
FIG. 4 is a sectional view of a locking mechanism provided by an embodiment of the present disclosure.
FIG. 5 is a schematic diagram of a locking mechanism provided by another embodiment of the present disclosure in an unlocked state.
FIG. 6 is a schematic diagram of a locking mechanism provided by another embodiment of the present disclosure in a moving state.
FIG. 7 is a schematic diagram of a locking mechanism provided by another embodiment of the present disclosure in a locked state.
FIG. 8 is a schematic diagram of a console provided by an embodiment of the present disclosure.
FIG. 9 is a schematic diagram of a console provided by another embodiment of the present disclosure.

### DETAILED DESCRIPTION

To make the objectives, technical solutions, and advantages of the present disclosure clearer and more understandable, the present disclosure will be further described in detail below with reference to the accompanying drawings and the embodiments. It should be understood that the specific embodiments described herein are only used to explain the present disclosure and are not intended to limit the present disclosure. Furthermore, the features, operations, or characteristics described herein may be combined in any suitable manner to form various embodiments. Meanwhile, the steps or actions in the description of the method may be reordered or adjusted in a manner obvious to those skilled in the art. Accordingly, the various sequences in the specification and accompanying drawings are merely for the purpose of clearly describing a certain embodiment and are not meant to be required sequences, unless otherwise indicated that a certain sequence must be followed.

In the description of the present disclosure, "a number of" means one or more, "a plurality of" means two or more, "greater than", "less than", "more than", etc. are understood as excluding the number, and "above", "below", "within", etc. are understood as including the number. If there is a description of "first" and "second", it is only for the purpose of distinguishing between technical features, and cannot be understood as indicating or implying relative importance, implicitly indicating the number of indicated technical features, or implicitly indicating the order of the indicated technical features.

The serial numbers themselves, such as "first" and "second", are used herein only to distinguish between the described objects, and do not have any order or technical meaning. The terms "connected" and "coupled" mentioned in the present disclosure include direct and indirect connections (coupling) unless otherwise specified.

In the description of the present disclosure, it should be understood that the orientation or positional relationship related to the orientation description, such as the orientation or positional relationship indicated by up, down, front, rear, left, right, etc., is based on the orientation or positional relationship shown in the accompanying drawings, and is only for the convenience of describing the present disclosure and simplifying the description, rather than indicating or implying that the device or element referred to must have a specific orientation, be constructed and operated in a specific orientation, and therefore cannot be understood as a limitation on the present disclosure.

The orientations such as up, down, front, rear, left, and right involved in the present disclosure are based on an orientation of a vehicle in a vehicle O-XYZ coordinate system. Where the origin O coincides with the center of mass of the vehicle. The X direction extends parallel to the ground, with the front end pointing forward and the rear end pointing rearward. The Y direction extends parallel to the ground, with the left side pointing to the left of the driver and the right side pointing to the right of the driver. The Z direction passes through the origin O, with the upper end pointing upward and the lower end pointing downward.

In the description of the present disclosure, unless otherwise clearly defined, words such as "provide", "dispose", "mount", and "connect" should be understood in a broad sense, and those skilled in the art can reasonably determine the specific meanings of the above words in the present disclosure in combination with the specific contents of the technical solutions.

Reference throughout this specification to "an embodiment", "some embodiments", "an illustrative embodiment", "an example", "a specific example", or "some examples" means that a specific feature, structure, material, or characteristic described in connection with the embodiment or example is included in at least one embodiment or example of the present disclosure. In this specification, schematic expressions of the above terms do not necessarily refer to the same embodiment or example. Moreover, the specific feature, structure, material, or characteristic described may be combined in a suitable manner in any one or more embodiments or examples.

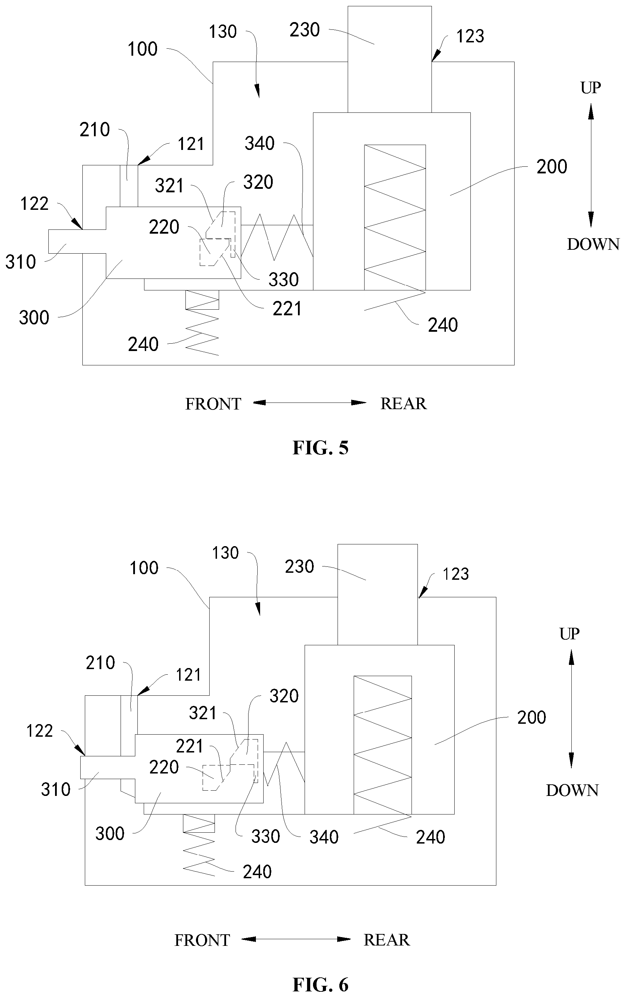

The locking mechanism, the console, and the vehicle in the embodiments of the present disclosure will be described below with reference to the accompanying drawings of this specification. It should be noted that in the accompanying drawings, a first direction is indicated by the UP-DOWN direction, a second direction is indicated by the FRONT-REAR direction, and a third direction is indicated by the LEFT-RIGHT direction, where the first direction and the second direction are shown perpendicular to each other in the drawings. A first abutting portion 220 and a second abutting portion 320 are shown in dashed lines in FIGS. 5 to 7.

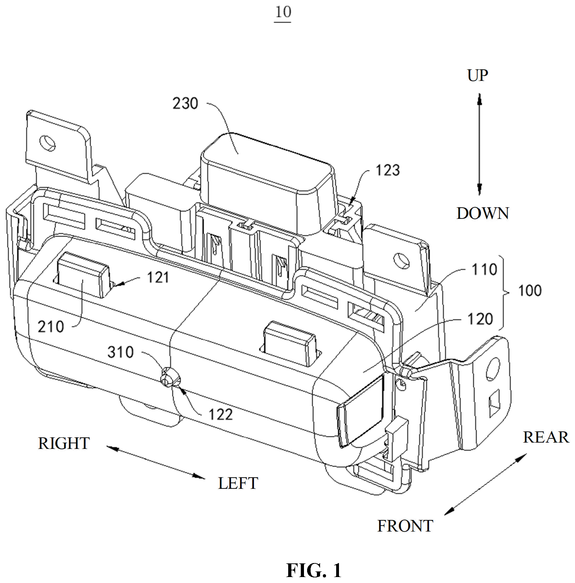

Referring to FIG. 1, FIG. 2, and FIG. 5 to FIG. 7, embodiments in a first aspect of the present disclosure provide a locking mechanism 10, including a main body 100, a locking member 200, and a limiting member 300. The main body 100 is provided with an accommodating cavity 130 and a first hole 121 in communication with the accommodating cavity 130. The locking member 200 is accommodated in the accommodating cavity 130, where the locking member 200 includes a locking portion 210 configured to lock a function box 50, and the locking member 200 is movable relative to the main body 100 to a first position and a second position in the first direction. The limiting member 300 and the locking member 200 are movable relative to each other in the second direction, where the second direction intersects the first direction.

When the locking member 200 is in the first position, the locking portion 210 is retracted in the first hole 121, the limiting member 300 abuts against the locking member 200, and the limiting member 300 is configured to limit movement of the locking portion 210 out of the first hole 121. When the locking member 200 is in the second position, at least a part of the locking portion 210 extends out of the main body 100 from the first hole 121.

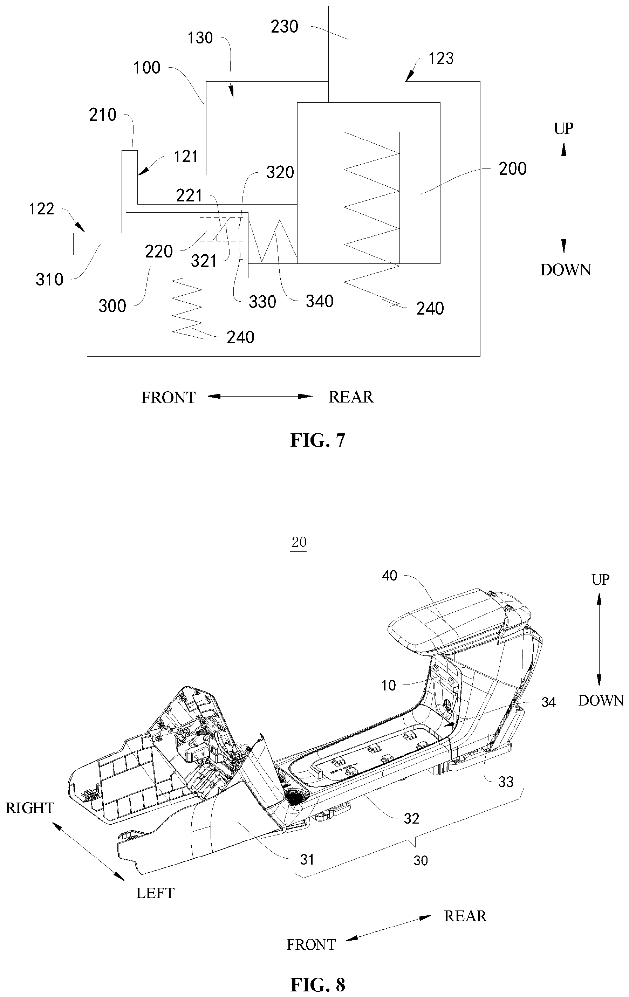

Specifically, referring to FIG. 5, when the function box 50 is not loaded, the locking mechanism 10 is in an unlocked state, at this time, the locking member 200 is kept in the first position under the action of the limiting member 300, and the locking portion 210 is retracted in the first hole 121 to hide the locking portion 210 and reduce the probability of interference, preventing the locking portion 210 from hitting a hand or hooking an object such as a strap, and reducing the probability of damage to the locking mechanism 10. Specifically, referring to FIGS. 6 and 7, when the function box 50 is being loaded, the limiting member 300 and the locking member 200 are driven to move relative to each other, so that the locking member 200, once no longer limited by the limiting member 300, moves to the second position, and the locking portion 210 extends out of the main body 100 to lock the function box 50, realizing the locking function. On the other hand, hiding the locking portion 210 can improve the aesthetic appeal.

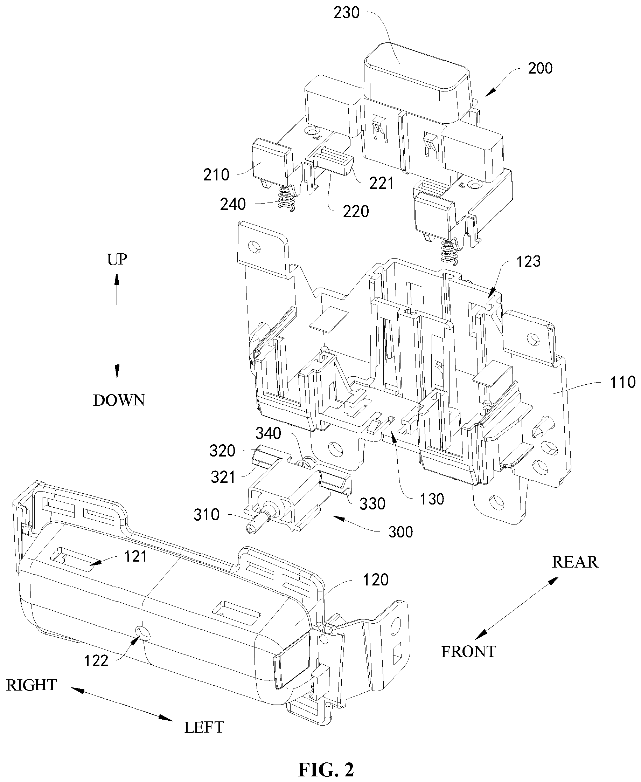

Referring to FIG. 2, in some embodiments, for the cooperation between the locking member 200 and the limiting member 300, reference may be made to the cooperation structure in a retractable pen such as a ballpoint pen with a spring-loaded retraction mechanism. In this embodiment, the second direction is a circumferential direction around the first direction. When the locking member 200 is in the first position, the locking member 200 is pressed downward, so that the locking member 200 may be retracted into the first hole 121 and then spring back out of the first hole 121. During this process, the limiting member 300 and the locking member 200 rotate relative to each other in the second direction, and the locking portion 210 moves out of the first hole 121 to achieve connection and assembly with the function box 50. When the locking member 200 is in the second position, the locking member 200 is pressed downward, so that the locking member 200 is retracted into the first hole 121 to unlock the function box 50, realizing unlocking and removal of the function box 50.

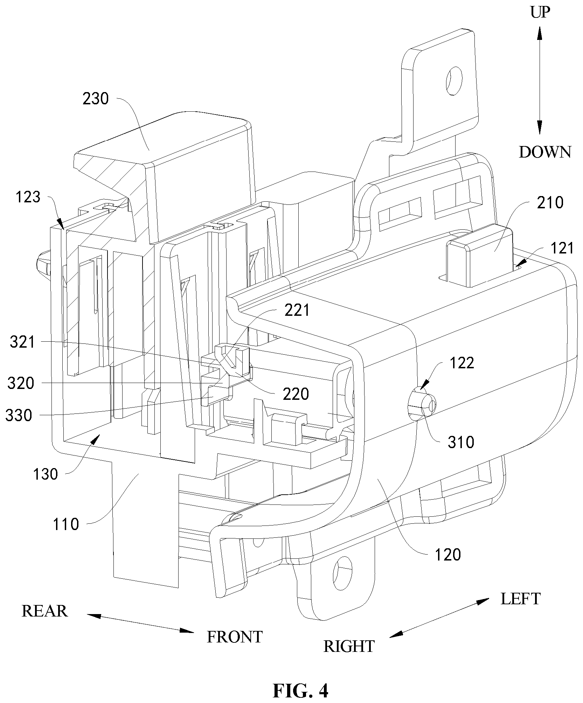

Referring to FIGS. 4 to 7, in some embodiments, the locking mechanism 10 further includes a first elastic member 240 connected to the locking member 200, where the first elastic member 240 can provide an elastic force to urge/drive the locking portion 210 to extend out of the main body 100, so as to ensure that the locking portion 210 extends in place and to maintain the extended state of the locking portion 210. The locking member 200 includes a first abutting portion 220 connected to the locking portion 210, and the limiting member 300 includes a second abutting portion 320. When the locking member 200 is in the first position, the second abutting portion 320 abuts against the first abutting portion 220, and the second abutting portion 320 is located between the first abutting portion 220 and the first hole 121 in the first direction, so that the locking portion 210 is held in the first hole 121 by the abutting of the second abutting portion 320 against the first abutting portion 220. When it is desired to release the abutting of the second abutting portion 320 against the first abutting portion 220, the second abutting portion 320 is urged/driven to move in the second direction to be separated from a side of the first abutting portion 220 in the second direction, and the locking member 200 is urged/driven by the first elastic member 240 to move upward to the second position, so that the locking portion 210 extends out of the main body 100 to lock the function box 50.

The second direction may be set to be perpendicular to the first direction, to facilitate assembly and movement coordination between various components.

Referring to FIGS. 2 and 5, in some embodiments, a side of the main body 100 in the second direction is provided with a second hole 122 in communication with the accommodating cavity 130, and the side of the main body 100 provided with the second hole 122 is configured to face the function box 50. The limiting member 300 includes a first unlocking portion 310 connected to the second abutting portion 320. When the locking member 200 is in the first position, at least a part of the first unlocking portion 310 extends out of the main body 100 from the second hole 122. When the function box 50 is assembled, during a process in which the function box 50 is pushed in the second direction, the function box 50 can abut against the first unlocking portion 310 and drive the limiting member 300 to move in the second direction, so as to release the limiting of the locking member 200 by the limiting member 300, so that the locking portion 210 can extend out of the first hole 121 to be connected to the function box 50. By setting the length of the first unlocking portion 310 extending out of the main body 100, when the function box 50 pushes the first unlocking portion 310 until the abutting of the second abutting portion 320 against the first abutting portion 220 is released, the position on the function box 50 that cooperates with the locking portion 210 is exactly opposite to the first hole 121, so that the function box 50 is automatically locked after being pushed in place.

Referring to FIGS. 5 to 7, in some embodiments, after the function box 50 is assembled in place, the first unlocking portion 310 is retracted toward the inside of the main body 100. After the function box 50 is removed, the locking mechanism 10 may be reset by pressing the locking member 200 in the first direction and pulling out the first unlocking portion 310 in the second direction. Referring to FIG. 2, FIG. 3, and FIG. 5, in some other embodiments, the locking mechanism 10 further includes a second elastic member 340 connected to the limiting member 300 and configured to urge/drive the first unlocking portion 310 to extend out of the main body 100. During the resetting of the locking mechanism 10, it is only necessary to press the locking member 200 in the first direction to make the first abutting portion 220 located on a lower side of the second abutting portion 320, and the second abutting portion 320 automatically resets under the elastic action of the second elastic member 340, thereby simplifying the resetting process. Moreover, since the second abutting portion 320 is subjected to a driving force in the second direction provided by the second elastic member 340, when the first abutting portion 220 is located on a left side of the second abutting portion 320, the second abutting portion 320 may impact the first abutting portion 220 under the elastic action, generating a sound. This sound may be used as a prompt tone to prompt an operator that the locking mechanism 10 has successfully entered the locked state, which is convenient for the operator to assemble the function box 50.

Referring to FIGS. 5 to 7, in some embodiments, the limiting member 300 further includes a limiting portion 330. The limiting portion 330 is connected to the second abutting portion 320, protrudes from at least one side of the second abutting portion 320 in the first direction, and is configured to abut against the first abutting portion 220 in the second direction. By providing the limiting portion 330, the movement of the limiting member 300 and the locking member 200 in the second direction can be limited, so as to reduce the probability of excessive movement between the limiting member 300 and the locking member 200, and improve the movement stability and structural stability of the locking mechanism 10. Referring to FIG. 5, the limiting portion 330 may be connected to the lower side of the second abutting portion 320, so that the second abutting portion 320 can abut against a left side of the limiting portion 330 when the locking member 200 is in the first position. Alternatively, referring to FIG. 7, the limiting portion 330 may be connected to an upper side of the second abutting portion 320, so that the second abutting portion 320 can abut against a left side of the limiting portion 330 when the locking member 200 is in the second position.

Referring to FIGS. 1 to 3, in some embodiments, the locking member 200 includes a plurality of locking portions 210 arranged at intervals in the third direction, where the third direction is perpendicular to the first direction and is perpendicular to the second direction. The arrangement of the plurality of locking portions 210 can increase the connection node between the locking mechanism 10 and the function box 50 to improve the connection strength and connection stability, reduce the possibility that the function box 50 is accidentally separated from the locking mechanism 10, and reduce the possible displacement after the function box 50 is connected to the locking mechanism 10.

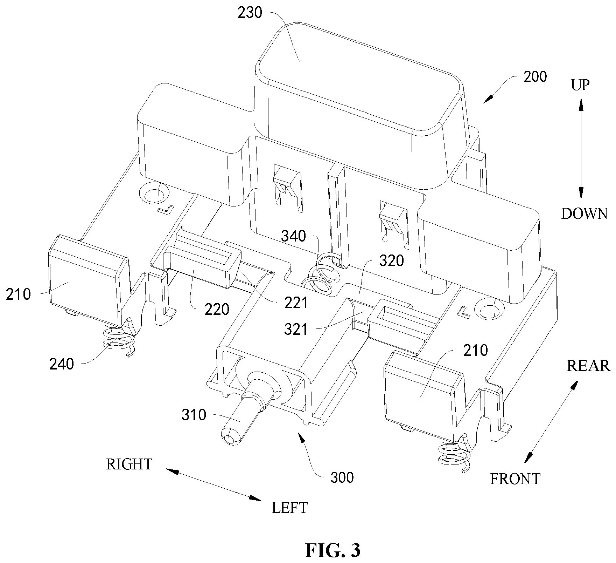

Referring to FIG. 3, in some embodiments, the first abutting portions 220 are respectively provided on sides of adjacent locking portions 210 close to each other, the limiting member 300 is provided between the adjacent locking portions 210, and the second abutting portions 320 are respectively provided on two sides of the limiting member 300 facing the adjacent locking portions 210, so that a single limiting member 300 can cooperate with a plurality of first abutting portions 220 to achieve limiting, reducing the number of the limiting members 300, and simplifying the structure of the locking mechanism 10. Moreover, the movement of the single limiting member 300 can synchronously drive the movement of the plurality of first abutting portions 220, which can improve the movement consistency and make the movement and cooperation more stable.

The number of the locking portions 210, the number of the first abutting portions 220, and the number of the limiting members 300 are not particularly limited in the present disclosure. Only a single limiting member 300, two second abutting portions 320, and two first abutting portions 220 are illustrated in the drawings; however, in practice, the number of the limiting member 300, the number of the second abutting portions 320, and the number of the first abutting portions 220 may be adaptively set according to requirements.

Referring to FIGS. 1 and 5, in some embodiments, the locking member 200 includes a second unlocking portion 230, and the main body 100 is provided with a third hole 123. The second unlocking portion 230 passes through the third hole 123, and the second unlocking portion 230 extends out of the main body 100. The third hole 123 and the first hole 121 are located on a same side of the main body 100. The arrangement of the second unlocking portion 230 can make it convenient to drive the locking member 200 to move, and both the third hole 123 and the first hole 121 can be provided at the position of the console facing a top side, so that a user can conveniently press the second unlocking portion 230 and observe the position of the locking portion 210, thereby facilitating assemble and unlocking of the function box 50.

Referring to FIGS. 1 and 5, in some embodiments, the second unlocking portion 230 is connected to the middle of the adjacent locking portions 210 in the third direction, which enables the entire locking member 200 subjected to uniform force, such that the locking member 200, when pressed, can move as a whole in the first direction, thereby reducing the probability of biased tilting of the locking member 200 and improving the movement stability.

On the other hand, referring to FIGS. 3 and 5, a plurality of first elastic members 240 may be provided, and connected one-to-one to corresponding positions of the second unlocking portion 230 and each of the first abutting portions 220, so as to provide a uniform elastic force, reducing the probability of posture tilting or biased tilting during movement of the locking member 200, and improving the movement stability and structural stability.

Referring to FIGS. 1 to 3, in some embodiments, the first abutting portion 220 is provided with a first guide surface 221 inclined with respect to the first direction. The second abutting portion 320 is provided with a second guide surface 321 inclined with respect to the first direction. When the locking member 200 is in the second position, the first guide surface 221 and the second guide surface 321 abut against each other. By providing the first guide surface 221 and the second guide surface 321, a guide buffer can be provided when the first abutting portion 220 and the second abutting portion 320 abut against each other in the second direction, so as to reduce rigid collision between the first abutting portion 220 and the second abutting portion 320, and when the locking member 200 is in the second position, the first abutting portion 220 and the second abutting portion 320 can be partially overlapped in the first direction, so as to further provide the structural limitation and improve the structural stability. When the locking member 200 is pressed downward, the first abutting portion 220 can smoothly move to the lower side of the second abutting portion 320 in the first direction under the guidance of the first guide surface 221 and the second guide surface 321, so as to stably achieve resetting of the locking mechanism 10.

Referring to FIGS. 1 and 2, in some embodiments, the main body 100 includes a mounting base 110 and a cover 120. The mounting base 110 is connected to the cover 120 to define the accommodating cavity 130 therebetween, and the first hole 121 is provided on the cover 120. The mounting base 110 provides a connection foundation for components such as the locking member 200 and the limiting member 300, and the cover 120 covers the mounting base 110 to shield the locking member 200 and the limiting member 300, while leaving the first hole 121 for the locking portion 210 to extend out or retract in. The mounting base 110 and the cover 120 may be detachably connected to each other by means of bolts, snap-fit, or the like, to facilitate subsequent maintenance. In the embodiment where the second hole 122 is provided, the second hole 122 is provided on the cover 120.

Referring to FIGS. 5 to 7, specific locking steps and unlocking steps of the locking mechanism 10 according to some embodiments will be described below.

When loading the function box 50, the function box 50 abuts against the first unlocking portion 310 towards the right side, so that the first unlocking portion 310 moves from the position in FIG. 5 into the accommodating cavity 130 to the position in FIG. 6. During this process, the second abutting portion 320 moves along with the first unlocking portion 310 from the position in FIG. 5 towards the right side to the position in FIG. 6, such that the first unlocking portion 310 and the second abutting portion 320 are offset from each other in the up-down direction to eliminate interference. The locking member 200 moves upwards from the position in FIG. 6 to the position in FIG. 7 under the action of the first elastic member 240, so that the locking portion 210 moves upwards along the first hole 121 to the outside of the main body 100, and is connected to the function box 50 to lock the function box 50, thereby limiting the movement of the function box 50 in the left-right direction. During this process, the first guide surface 221 and the second guide surface 321 come into contact with each other under the combined action of the abutting force from the function box 50, the elastic force of the first elastic member 240, and the elastic force of the second elastic member 340, and a clicking sound is generated when the first guide surface 221 and the second guide surface 321 come into contact with each other, indicating that the function box 50 is locked in place.

When unlocking the function box 50, the second unlocking portion 230 is pressed downward to drive the locking portion 210 to move downward from the position shown in FIG. 7 to the position shown in FIG. 6, so that the locking portion 210 is retracted into the first hole 121 and is disconnected from the function box 50, allowing the function box 50 to be detached from the locking mechanism 10 to unlock the function box 50. Meanwhile, the first abutting portion 220 moves to the lower side of the second abutting portion 320 to eliminate the interference between the first abutting portion 220 and the second abutting portion 320 in the left-right direction. After the function box 50 is removed, the first unlocking portion 310 loses the abutting force from the function box 50, and the limiting member 300 moves towards the left side from the position in FIG. 6 to the position in FIG. 5 under the action of the second elastic member 340, so that most of the first unlocking portion 310 extends out of the main body 100, and the second abutting portion 320 synchronously moves to the upper side of the first abutting portion 220 to limit the upward movement of the first abutting portion 220, so as to keep the locking portion 210 in the first hole 121, thereby realizing the hiding of the locking portion 210.

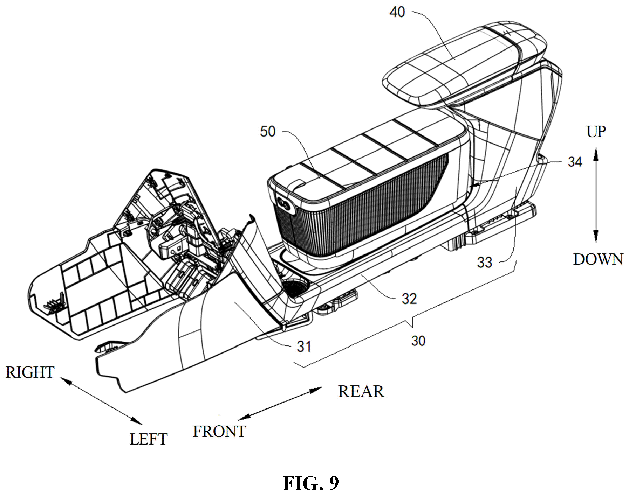

Referring to FIGS. 8 and 9, a console 20 provided by embodiments in a second aspect of the present disclosure includes a console body 30 and the locking mechanism 10 of any one of the above embodiments, where the main body 100 is connected to the console body 30. By applying the locking mechanism 10 of the embodiments of the present disclosure, on the basis of realizing the detachable connection of the function box 50, the locking portion 210 can be hidden when the function box 50 is not loaded, thereby reducing the probability of interference, and prolonging the service life of the parts of the console 20. On the other hand, hiding the locking portion 210 can improve the aesthetic appeal of the console 20.

Referring to FIG. 9, in some embodiments, the console 20 further includes the function box 50, the console body 30 is provided with a mounting groove 34 in which the function box 50 is accommodated, and the function box 50 is connected to the locking portion 210. The function box 50 can be selected from a storage box, a makeup case, a game box, and other boxes suitable for various usage requirements. The function box 50 is assembled on the console 20, which can improve the functionality of the console 20. Moreover, the console 20 can be disassembled from the locking mechanism 10 for off-vehicle use.

Referring to FIG. 9, in some embodiments, the console body 30 includes a front base 31, a bottom base 32, and a rear base 33 connected in sequence. The front base 31 is configured to face the front of the vehicle, the mounting groove 34 is defined between the front base 31, the bottom base 32, and the rear base 33, and the main body 100 is connected to the rear base 33. The loading action of the function box 50 is usually pushing the function box 50 from the front to the rear, and providing the locking mechanism 10 on the rear base 33 enables the function box 50 to be locked from the rear side, which is more in line with conventional assembly practices and can facilitate assembly of the function box 50. Moreover, other connection mechanisms can be respectively provided at other positions, such as on the bottom base 32 and the front base 31, to further improve the connection stability of the function box 50.

Referring to FIGS. 8 and 9, a vehicle according to embodiments in a third aspect of the present disclosure includes the console 20 of any one of the above embodiments. By applying the console 20 of the embodiments of the present disclosure, the function box 50 can be conveniently disassembled and loaded, and the locking portion 210 can be hidden when the function box 50 is not loaded, thereby reducing the possibility of interference from the locking portion 210 and improving the use experience and aesthetics.

Referring to FIGS. 8 and 9, in some embodiments, the vehicle includes a seat, and the console 20 further includes an armrest 40. The main body 100 is connected to the console 20. The armrest 40 is connected to the console 20, the armrest 40 is located on a side of the locking mechanism 10 in the first direction, and the armrest 40 covers at least a part of the locking mechanism 10 in the first direction. The seat is located on a side of the locking mechanism 10 in a third direction, and the seat covers at least a part of the locking mechanism 10 in the third direction. The third direction is perpendicular to the first direction and is perpendicular to the second direction. By shielding the locking mechanism 10 with the armrest 40 and the seat, the locking mechanism 10 can be further hidden to directly reduce the possibility of interference between the user and the locking mechanism 10, and further improve the aesthetics, making the interior of the vehicle cleaner.

The vehicle may be a private vehicle, such as a car, an SUV, an MPV, or a pickup truck. The vehicle may also be a commercial vehicle, such as a van, a bus, a minivan, or a large trailer. The vehicle may be a fuel vehicle or a new energy vehicle. When the vehicle is the new energy vehicle, it may be a hybrid vehicle or a pure electric vehicle.

The apparatus embodiments described above are merely illustrative, and units described as separate components may or may not be physically separated, that is, may be located in one place, or may be distributed on a plurality of network nodes. Some or all of the modules may be selected according to actual needs to achieve the objectives of the solutions of the embodiments.

The embodiments of the present disclosure have been described in detail above with reference to the accompanying drawings, but the present disclosure is not limited to the above embodiments. Those skilled in the art may make various equivalent modifications or substitutions without departing from the spirit of the present disclosure. Such equivalent modifications or substitutions all fall within the scope of the present disclosure defined by the claims. In addition, the embodiments of the present disclosure and the features in the embodiments may be combined with each other without conflict.

## Claims

1. A locking mechanism, **characterized by** comprising:
a main body provided with an accommodating cavity and a first hole in communication with the accommodating cavity;
a locking member accommodated in the accommodating cavity, wherein the locking member comprises a locking portion configured to lock a function box, and the locking member is movable relative to the main body to a first position and a second position in a first direction; and
a limiting member, wherein the limiting member and the locking member are movable relative to each other in a second direction, and the second direction intersects the first direction;
wherein when the locking member is in the first position, the locking portion is retracted into the first hole, the limiting member abuts against the locking member, and the limiting member is configured to limit movement of the locking portion out of the first hole; and when the locking member is in the second position, at least a part of the locking portion extends out of the main body from the first hole.

2. The locking mechanism according to claim 1, **characterized in that** the locking mechanism further comprises a first elastic member connected to the locking member, and the first elastic member is configured to drive the locking portion to extend out of the main body; and the locking member comprises a first abutting portion connected to the locking portion, and the limiting member comprises a second abutting portion;
when the locking member is in the first position, the second abutting portion abuts against the first abutting portion, and the second abutting portion is located between the first abutting portion and the first hole in the first direction; and
when the locking member is in the second position, the second abutting portion is located on a side of the first abutting portion in the second direction.

3. The locking mechanism according to claim 2, **characterized in that** a second hole is provided on a side of the main body in the second direction and is in communication with the accommodating cavity, and the side of the main body provided with the second hole is configured to face the function box; and the limiting member comprises a first unlocking portion connected to the second abutting portion, and when the locking member is in the first position, at least a part of the first unlocking portion extends out of the main body from the second hole.

4. The locking mechanism according to claim 3, **characterized in that** the locking mechanism further comprises a second elastic member connected to the limiting member, and the second elastic member is configured to drive the first unlocking portion to extend out of the main body.

5. The locking mechanism according to claim 3, **characterized in that** the limiting member further comprises a limiting portion connected to the second abutting portion, the limiting portion protrudes from at least one of sides of the second abutting portion in the first direction, and the limiting portion is configured to abut against the first abutting portion in the second direction.

6. The locking mechanism according to claim 1, **characterized in that** the locking member comprises a plurality of locking portions arranged at intervals in a third direction, wherein the third direction is perpendicular to the first direction and is perpendicular to the second direction.

7. The locking mechanism according to claim 6, **characterized in that** the locking mechanism further comprises a first elastic member connected to the locking member, and the first elastic member is configured to drive the locking portion to extend out of the main body; the locking member comprises a first abutting portion connected to the locking portion, and the limiting member comprises a second abutting portion; when the locking member is in the first position, the second abutting portion abuts against the first abutting portion, and the second abutting portion is located between the first abutting portion and the first hole in the first direction; and when the locking member is in the second position, at least a part of the second abutting portion is located on a side of the first abutting portion in the second direction;
wherein first abutting portions are respectively provided on sides of adjacent locking portions close to each other, the limiting member is provided between the adjacent locking portions, and second abutting portions are respectively provided on two sides of the limiting member facing the adjacent locking portions.

8. The locking mechanism according to claim 7, **characterized in that** the locking member comprises a second unlocking portion connected to a middle of the adjacent locking portions in the third direction, the main body is provided with a third hole, the second unlocking portion passes through the third hole, the second unlocking portion extends out of the main body, and the third hole and the first hole are located on a same side of the main body.

9. The locking mechanism according to any one of claims 2 to 8, **characterized in that** the first abutting portion is provided with a first guide surface inclined with respect to the first direction; the second abutting portion is provided with a second guide surface inclined with respect to the first direction; and when the locking member is in the second position, the first guide surface and the second guide surface abut against each other.

10. The locking mechanism according to claim 1, **characterized in that** the locking member comprises a second unlocking portion connected to the locking portion, the main body is provided with a third hole, the second unlocking portion passes through the third hole, the second unlocking portion extends out of the main body, and the third hole and the first hole are located on a same side of the main body.

11. The locking mechanism according to claim 1, **characterized in that** the main body comprises a mounting base and a cover, the mounting base is connected to the cover, the accommodating cavity is defined between the mounting base and the cover, and the first hole is provided on the cover.

12. A console, comprising a console body and the locking mechanism according to any one of claims 1 to 11, wherein the main body is connected to the console body.

13. The console according to claim 12, **characterized in that** the console further comprises a function box, the console body is provided with a mounting groove, the function box is accommodated in the mounting groove, and the function box is connected to the locking portion.

14. The console according to claim 12 or 13, **characterized in that** the console body comprises a front base, a bottom base, and a rear base connected in sequence, the front base is configured to face a front of a vehicle, the mounting groove is defined between the front base, the bottom base, and the rear base, and the main body is connected to the rear base.

15. A vehicle, **characterized by** comprising the console according to any one of claims 12 to 14.

16. The vehicle according to claim 15, **characterized by** comprising a seat, wherein the console further comprises an armrest, the main body is connected to the console, the armrest is connected to the console, the armrest is located on a side of the locking mechanism in the first direction, the armrest covers at least a part of the locking mechanism in the first direction, the seat is located on a side of the locking mechanism in a third direction, and the seat covers at least a part of the locking mechanism in the third direction, wherein the third direction is perpendicular to the first direction and is perpendicular to the second direction.
